# FASCICULE DE BREVET EUROPEEN

(11) **EP 0 478 403 B1**
(45) Date de publication et mention de la délivrance du brevet: **19.10.1994**
(21) Numéro de dépôt: 91402295.9
(22) Date de dépôt: 22.08.1991
(51) Int. Cl.: B60K 11/04, F16B 2/24

(54) **Dispositif de fixation d'un radiateur de refroidissement d'un moteur de véhicule automobile**
Befestigungseinrichtung für einen Kühler eines Kraftfahrzeugmotors
Mounting arrangement of a cooling radiator for a vehicle motor

(30) Priorité: 28.09.1990 FR 9012025
(43) Date de publication de la demande: 01.04.1992
(73) Titulaire: AUTOMOBILES PEUGEOT, 75116 Paris (FR); AUTOMOBILES CITROEN, 92200 Neuilly-sur-Seine (FR)
(72) Inventeur: Huon, Daniel, F-78570 Andrésy (FR)
(74) Mandataire: Habasque, Etienne Joel Jean-François

(56) Documents cités:
- FR-A- 2 386 713
- FR-A- 2 561 998
- FR-A- 2 564 899
- US-A- 3 700 061

## Description

La présente invention concerne un dispositif de fixation d'un radiateur de refroidissement d'un moteur de véhicule automobile, sur le reste de la structure de celui-ci.

On connait déjà dans l'état de la technique des dispositifs de fixation de ce type qui comportent au moins une attache élastique munie de deux branches dont des extrémités correspondantes sont reliées par une zone déformable élastiquement et dont la première branche est reliée à l'un des organes, radiateur ou structure, et dont la seconde branche est déplaçable élastiquement entre une position escamotée de montage ou de démontage du radiateur et une position active dans laquelle elle coopère avec l'autre des organes, radiateur ou structure, pour fixer le radiateur sur la structure.

De tels dispositifs sont connus par exemple des documents FR-A-2 561 998 au nom de la Régie Nationale des Usines Renault et FR-A-2 564 899 au nom des Demanderesses.

Dans les dispositifs décrits dans ces documents, l'attache élastique est disposée dans la partie supérieure du radiateur, tandis que la partie inférieure de celui-ci comporte ou est adaptée pour coopérer avec un téton de centrage et de fixation du radiateur sur la structure.

Ces dispositifs présentent un certain nombre d'inconvénients, dans la mesure où l'attache élastique est reliée à la structure du véhicule et se trouve dans le trajet de déplacement du radiateur lors de son montage en position, de sorte qu'elle rend celui-ci relativement difficile en raison du peu d'espace libre à ce niveau du véhicule.

Par ailleurs, une telle structure ne permet pas d'automatiser le montage des radiateurs.

On connaît également du document US-A-3 700 061 un dispositif conforme au préambule de la revendication 1. Cependant la structure de ce dispositif est relativement complexe et les opérations de montage et de démontage de celui-ci sont relativement longues.

Le but de l'invention est donc de résoudre ces problèmes en proposant un dispositif de fixation qui soit simple, fiable, et qui permette un montage et un démontage très rapides du radiateur dans la structure.

A cet effet, l'invention a pour objet un dispositif de fixation d'un radiateur de refroidissement d'un moteur de véhicule automobile, sur le reste de la structure de celui-ci, comportant au moins une attache élastique munie de deux branches dont des extrémités correspondantes sont reliées par une zone déformable élastiquement, et dont la première branche est reliée à l'un des organes, radiateur ou structure, et dont la seconde branche est déplaçable élastiquement entre une position escamotée de montage ou de démontage du radiateur et une position active dans laquelle elle coopère avec l'autre des organes, radiateur ou structure, pour fixer le radiateur sur la structure, et des moyens de blocage de la seconde branche de l'attache en position escamotée lors du montage ou du démontage du radiateur, caractérisé en ce qu'il comporte des moyens de fixation de la première branche de l'attache sur un bord latéral du radiateur et en ce que la seconde branche de celui-ci comporte une partie en saillie adaptée pour s'engager dans un évidement de la structure pour bloquer le radiateur en position dans celle-ci, après son dégagement des moyens de blocage.

Selon un mode de réalisation, les moyens de blocage sont prévus dans une partie en saillie sur une face du radiateur.

Selon un autre mode de réalisation, les moyens de blocage sont prévus à l'extrémité d'une pièce intermédiaire interposée entre la première branche de l'attache élastique et le radiateur.

L'invention sera mieux comprise à l'aide de la description qui va suivre, donnée uniquement à titre d'exemple et faite en se référant aux dessins annexés, sur lesquels :
- la Fig.1 représente une vue en coupe d'un premier mode de réalisation d'un dispositif de fixation selon l'invention;
- la Fig.2 représente une vue de dessus du dispositif représenté sur la Fig.1;
- les Fig.3, 4 et 5 représentent différentes vues d'un premier mode de réalisation de moyens de fixation d'une attache, entrant dans la constitution d'un dispositif selon l'invention, sur un radiateur;
- la Fig.6 représente une vue schématique d'un second mode de réalisation d'un dispositif de fixation selon l'invention;
- la Fig.7 représente une vue de dessus du dispositif représenté sur la Fig.6;
- les Fig.8,9 et 10 représentent différentes vues d'un second mode de réalisation de moyens de fixation d'une attache, entrant dans la constitution d'un dispositif selon l'invention, sur un radiateur; et
- les Fig.11 et 12 illustrent la mise en place et la fixation d'un radiateur dans une structure de véhicule automobile, à l'aide d'un dispositif de fixation selon l'invention.

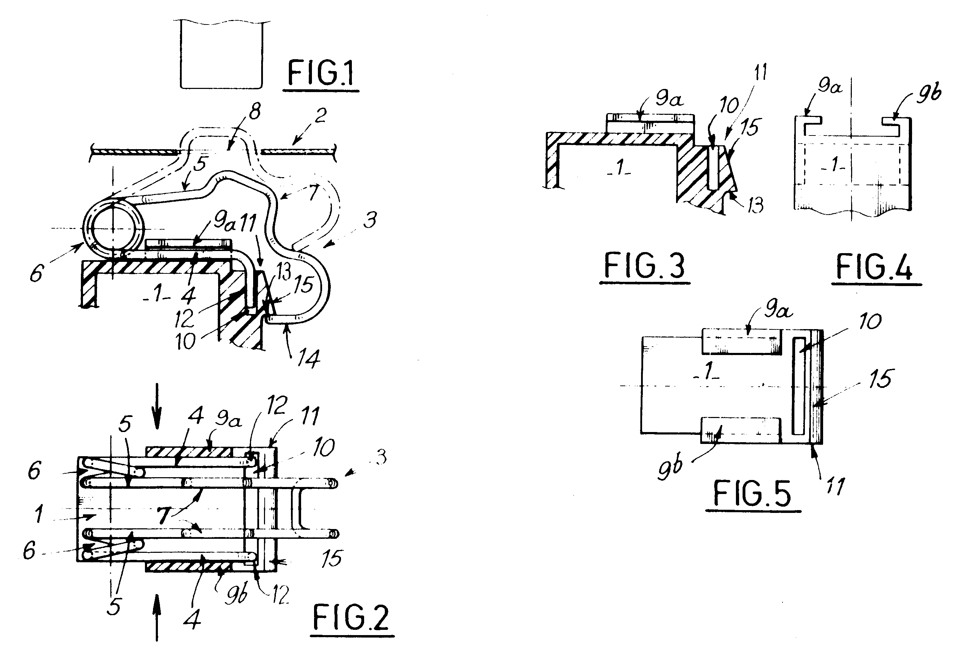

Ainsi qu'on peut le voir sur la Fig.1, le dispositif de fixation d'un radiateur 1 de refroidissement d'un moteur de véhicule automobile, objet de la présente invention, sur le reste de la structure de celui-ci, désignée par la référence générale 2 sur cette figure, comporte au moins une attache élastique désignée par la référence générale 3. Cette attache élastique présente deux branches respectivement 4 et 5, qui sont reliées par une zone 6 déformable élastiquement, permettant de solliciter élastiquement les branches l'une en direction opposée de l'autre.

La première branche 4 de cette attache élastique est reliée au radiateur 1 tandis que la seconde branche 5 est déplaçable élastiquement entre une position escamotée représentée en trait continu sur cette figure, permettant le montage ou le démontage du radiateur et une position active représentée en traits interrompus, dans laquelle elle coopère avec la structure 2 pour fixer le radiateur sur la structure.

A cet effet, la seconde branche 5 de l'attache élastique comporte dans sa partie centrale, une partie en saillie 7 adaptée pour s'engager dans un évidement 8 de la structure pour bloquer le radiateur en position dans celle-ci.

Bien entendu, l'inverse est également possible, c'est à dire que la première branche de l'attache peut être reliée à la structure, tandis que la seconde branche de celle-ci, comporte une partie en saillie adaptée pour coopérer avec un évidement de forme complémentaire du radiateur, pour fixer celui-ci en position.

Des moyens de fixation de la première branche de l'attache sur un bord latéral du radiateur sont prévus sur celui-ci.

Comme on peut le voir sur les Fig.1 à 5, ces moyens de fixation de la première branche 4 de l'attache 3 sur le radiateur 1, peuvent comporter deux pattes respectivement 9a et 9b, de maintien de cette branche, ces pattes s'étendant parallèlement sur le bord latéral correspondant du radiateur. Les pattes de maintien comprennent une portion repliée sous laquelle s'engage la première branche de l'attache pour assurer sa fixation sur le radiateur.

Dans le mode de réalisation représenté, l'attache élastique est formée à partir d'un fil à ressort, mais il va de soi que cette attache peut être réalisée par exemple à partir d'une lame élastique ou autre.

Les moyens de fixation de la première branche 4 de l'attache sur le radiateur comprennent également au moins un orifice 10 s'étendant dans un plan à peu près perpendiculaire à celui des pattes de maintien, cet orifice pouvant se présenter, comme on peut le voir sur ces figures, sous la forme d'une fente ménagée dans une partie 11 en saillie sur une face du radiateur et dans laquelle s'engagent des portions repliées 12 des extrémités correspondantes de la première branche.

On conçoit que ces moyens de fixation permettent de maintenir en position la première branche de l'attache et donc l'attache par rapport au radiateur.

Comme on peut le voir sur ces figures, des moyens de blocage de la seconde branche 5 de l'attache en position escamotée, pour faciliter le montage ou le démontage du radiateur, sont également prévus sur cette partie 11 en saillie sur la face du radiateur. Ces moyens de blocage comprennent en fait une surface de butée 13 adaptée pour coopérer avec une portion repliée en forme de crochet 14 de l'extrémité correspondante de la seconde branche 5 de l'attache élastique.

Les moyens de blocage comprennent également une rampe 15 de guidage de l'extrémité 14 en forme de crochet de la seconde branche de l'attache, en direction de cette surface de butée 13.

On conçoit donc que la seconde branche 5 de l'attache élastique est montée déplaçable entre une position escamotée dans laquelle elle est maintenue, par coopération de son extrémité en forme de crochet 14 avec la surface de butée 13 de la partie en saillie 11 de la face correspondante du radiateur, cette mise en position de blocage étant facilitée par la rampe 15, et une position active par dégagement de son extrémité en forme de crochet 14, de cette surface de butée 13. Dans cette position, elle permet comme cela a été expliqué précédemment, de bloquer le radiateur dans la structure.

D'autres modes de réalisation de ces différents moyens sont également envisageables.

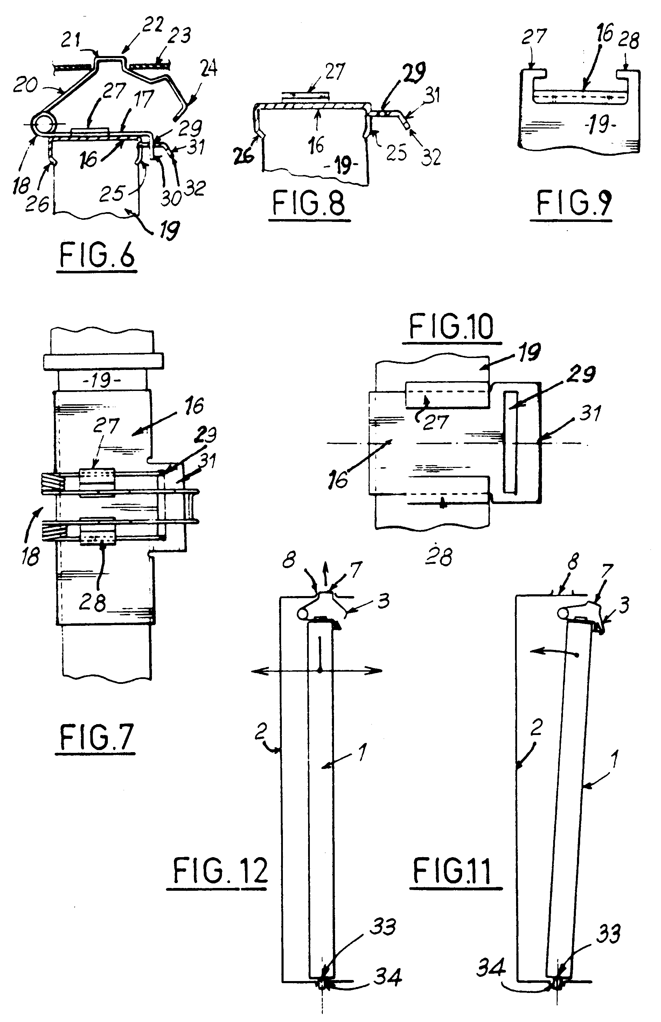

Comme on peut le voir sur les Fig.6 à 10, les moyens de blocage peuvent également être prévus à l'extrémité d'une pièce intermédiaire 16 interposée entre la première branche 17 d'une attache élastique 18 et le bord correspondant d'un radiateur 19.

La seconde branche 20 de l'attache élastique comporte toujours une partie en saillie 21 adaptée pour coopérer avec un évidement 22 de la structure 23 du véhicule pour bloquer le radiateur en position, et une extrémité 24 en forme de crochet adaptée pour coopérer avec des moyens de blocage en position escamotée de cette branche.

La pièce intermédiaire 16 interposée entre la première branche 17 de l'attache et le radiateur 19 comporte des moyens de maintien en position sur le bord du radiateur, ces moyens de maintien étant constitués par exemple par deux parties en saillie 25 et 26 de part et d'autre de ce radiateur.

Les moyens de fixation de la première branche de l'attache sur le bord correspondant du radiateur comportent également deux pattes de maintien respectivement 27 et 28 entre lesquelles s'engage la première branche de l'attache élastique et au moins un orifice 29 se présentant par exemple sous la forme d'une fente s'étendant dans un plan à peu près perpendiculaire à celui des pattes de maintien 27 et 28 et ménagé à proximité de l'extrémité correspondante de cette pièce intermédiaire 16. La première branche 17 de l'attache comporte également une portion d'extrémité 30 repliée et adaptée pour s'engager dans cet orifice 29 de sorte que cette attache est maintenue en position sur le bord correspondant du radiateur.

Des moyens de blocage de la seconde branche 20 de l'attache élastique, en position escamotée pour le montage et le démontage du radiateur, sont également prévus à l'extrémité de cette pièce intermédiaire 16. En effet, cette extrémité de la pièce intermédiaire 16 présente une portion inclinée 31 formant rampe d'accès de l'extrémité correspondante en forme de crochet 24 de la seconde branche de l'attache, vers une surface de butée 32 pour le blocage de cette seconde branche de l'attache en position escamotée.

Ainsi, et comme on peut le voir sur les Fig.11 et 12, le dispositif de fixation selon l'invention comporte au moins une attache 3 telle que décrite précédemment qui est fixée sur l'un des bords par exemple supérieur, du radiateur 1 pour assurer sa fixation dans la structure 2. Sur son bord opposé à l'attache 3, c'est à dire sur son bord inférieur, le radiateur comporte par exemple un téton de centrage 33 adapté pour s'engager dans un évidement 34 de la structure lors du pivotement du radiateur vers sa position de montage, comme cela est connu des documents mentionnés précédemment.

Lors du montage du radiateur, la seconde branche de l'attache élastique est bloquée en position escamotée, de sorte que la mise en place du radiateur est très facile. Une fois le radiateur mis en place, il suffit de dégager la seconde branche de l'attache élastique de la surface de butée des moyens de blocage en position escamotée, pour que celle-ci remonte vers sa position active dans laquelle la partie en saillie 7 de celle-ci, s'engage dans l'évidement 8 correspondant de la structure, pour bloquer le radiateur en position.

On conçoit que ces opérations de montage et de démontage des radiateurs peuvent ainsi être facilement automatisées.

## Revendications

1. Dispositif de fixation d'un radiateur (1;19) de refroidissement d'un moteur de véhicule automobile, sur le reste de la structure (2;23) de celui-ci, comportant au moins une attache élastique (3;18) munie de deux branches (4,5; 17,20) dont des extrémités correspondantes sont reliées par une zone (6) déformable élastiquement, et dont la première branche (4;17) est reliée à l'un des organes, radiateur ou structure, et dont la seconde branche (5;20) est déplaçable élastiquement entre une position escamotée de montage ou de démontage du radiateur et une position active dans laquelle elle coopére avec l'autre des organes, radiateur ou structure, pour fixer le radiateur sur la structure, et des moyens de blocage (13,15; 31,32) de la seconde branche de l'attache en position escamotée lors du montage ou du démontage du radiateur, caractérisé en ce qu'il comporte des moyens de fixation (9a,9b, 10; 27, 28,29) de la première branche (4;17) de l'attache sur un bord latéral du radiateur et en ce que la seconde branche (5;20) de celle-ci comporte une partie en saillie (7;21) adaptée pour s'engager dans un évidement (8; 22) de la structure pour bloquer le radiateur en position dans celle-ci, après son dégagement des moyens de blocage.

2. Dispositif selon la revendication 1, caractérisé en ce que les moyens de blocage de la seconde branche de l'attache en position escamotée sont prévus dans une partie en saillie (11) sur une face du radiateur.

3. Dispositif selon la revendication 1, caractérisé en ce que les moyens de blocage de la seconde branche de l'attache en position escamotée sont prévus à l'extrémité d'une pièce intermédiaire (16) interposée entre la première branche de l'attache élastique et le radiateur et comportant des moyens (25;26) de maintien en position sur le bord du radiateur.

4. Dispositif selon l'une quelconque des revendications précédentes, caractérisé en ce que les moyens de blocage comprennent une surface de butée (13; 32) adaptée pour coopérer avec une portion repliée en forme de crochet (14;24) de l'extrémité correspondante de la seconde branche de l'attache.

5. Dispositif selon la revendication 4, caractérisé en ce que les moyens de blocage comprennent une rampe (15; 31) de guidage de l'extrémité en forme de crochet de la seconde branche de l'attache, en direction de la surface de butée.

6. Dispositif selon l'une quelconque des revendications précédentes, caractérisé en ce que les moyens de fixation de la première branche (4;17) de l'attache sur le bord latéral du radiateur, comportent deux pattes de maintien (9a, 9b; 27, 28) de cette branche, prévues sur le bord latéral correspondant du radiateur.

7. Dispositif selon les revendications 2 et 6, caractérisé en ce que les moyens de fixation comprennent au moins un orifice (10) s'étendant dans un plan à peu près perpendiculaire à celui des pattes de maintien (9a,9b), ménagé dans la partie en saillie (11) sur la face du radiateur, et dans lequel s'engage une portion repliée (12) de l'extrémité correspondante de la première branche.

8. Dispositif selon les revendications 3 et 6, caractérisé en ce que les moyens de fixation comprennent au moins un orifice (29) s'étendant dans un plan à peu près perpendiculairement à celui des pattes de maintien (27,28), ménagé dans la pièce intermédiaire (16) et dans lequel s'engage une portion repliée (30) de l'extrémité correspondante de la première branche.

## Claims

1. A device for mounting a radiator (1;19) for cooling an engine of a motor vehicle, on the rest of the structure (2;23) of the latter, comprising at least one resilient fastener (3;18) provided with two branches (4,5;17,20) corresponding ends of which are connected by a resiliently deformable zone (6), and the first branch (4;17) of which is connected to one of the components, radiator or structure, and the second branch (5;20) of which is resiliently movable between a retracted position for fitting or for removal of the radiator and an active position in which it interacts with the other of the components, radiator or structure, in order to mount the radiator on the structure, and means (13,15;31,32) for blocking the second branch of the fastener in retracted position during the fitting or the removal of the radiator, characterised in that it comprises means (9a,9b,10;27,28,29) for attaching the first branch (4;17) of the fastener onto a lateral edge of the radiator and in that the second branch (5;20) of the latter comprises a projecting part (7;21) adapted to fit into a cavity (8;22) of the structure so as to block the radiator in position in the latter, after its disengagement from the blocking means.

2. The device according to Claim 1, characterised in that the means for blocking the second branch of the fastener in retracted position are provided in a projecting part (11) on one face of the radiator.

3. The device according to Claim 1, characterised in that the means for blocking the second branch of the fastener in retracted position are provided at the end of an intermediate piece (16) interposed between the first branch of the resilient fastener and the radiator and comprising means (25;26) for maintaining in position on the edge of the radiator.

4. The device according to any of the preceding claims, characterised in that the blocking means comprise a stop surface (13;32) adapted to interact with a hook-shaped folded-back portion (14;24) of the corresponding end of the second branch of the fastener.

5. The device according to Claim 4, characterised in that the blocking means comprise a ramp (15;31) for guiding the hook-shaped end of the second branch of the fastener, in the direction of the stop surface.

6. The device according to any of the preceding claims, characterised in that the means for attaching the first branch (4;17) of the fastener onto the lateral edge of the radiator, comprise two lugs (9a,9b;27,28) for maintaining this branch, provided on the corresponding lateral edge of the radiator.

7. The device according to Claims 2 and 6, characterised in that the attachment means comprise at least one aperture (10) expending in a plane approximately perpendicular to that of the maintaining lugs (9a,9b), made in the projecting part (11) on the face of the radiator, and into which fits a folded-back portion (12) of the corresponding end of the first branch.

8. The device according to Claims 3 and 6, characterised in that the attachment means comprise at least one aperture (29) extending in a plane approximately perpendicularly to that of the maintaining lugs (27,28), made in the intermediate piece (16) and into which fits a folded-back portion (30) of the corresponding end of the first branch.

## Patentansprüche

1. Befestigungseinrichtung für einen Kühler (1; 19) eines Motors eines Kraftfahrzeuges am restlichen Teil der Konstruktion (2; 23) des Kraftfahrzeuges, mit mindestens einer elastischen Halterung (3; 18), die mit zwei Schenkeln (4, 5; 17, 20) versehen ist, deren entsprechende Enden über einen elastisch verformbaren Bereich (6) verbunden sind und von denen der erste Schenkel (4; 17) an einem der Teile, Kühler oder Konstruktion, befestigt ist, während der zweite Schenkel (5; 20) elastisch zwischen einer zurückgezogenen Montage- oder Demontageposition des Kühlers und einer aktiven Position, in der der Schenkel mit dem anderen Teil, Kühler oder Konstruktion, zusammenwirkt, um den Kühler an der Konstruktion zu fixieren, bewegbar ist, und mit Arretierungseinrichtungen (13, 15; 31, 32) für den zweiten Schenkel der Halterung in der zurückgezogenen Position während der Montage oder Demontage des Kühlers, dadurch gekennzeichnet, daß sie Befestigungseinrichtungen (9a, 9b, 10; 27, 28, 29) für den ersten Schenkel (4; 17) der Halterung an einem seitlichen Rand des Kühlers aufweist und daß der zweite Schenkel (5; 20) der Halterung einen vorstehenden Abschnitt (7; 21) besitzt, der mit einer Ausnehmung (8; 22) der Konstruktion in Eingriff treten kann, um nach dem Lösen der Arretierungseinrichtungen den Kühler in der Konstruktion zu arretieren.

2. Befestigungseinrichtung nach Anspruch 1, dadurch gekennzeichnet, daß die Arretierungseinrichtungen für den zweiten Schenkel der Halterung in der zurückgezogenen Position in einem vorstehenden Teil (11) auf einer Fläche des Kühlers vorgesehen sind.

3. Befestigungseinrichtung nach Anspruch 1, dadurch gekennzeichnet, daß die Arretierungseinrichtungen für den zweiten Schenkel der Halterung in der zurückgezogenen Position am Ende eines Zwischenteiles (16) vorgesehen sind, das zwischen dem ersten Schenkel der elastischen Halterung und dem Kühler angeordnet ist und Einrichtungen (25; 26) zum Halten am Kühlerrand aufweist.

4. Befestigungseinrichtung nach einem der vorhergehenden Ansprüche, dadurch gekennzeichnet, daß die Arretierungseinrichtungen eine Anschlagfläche (13; 32) umfassen, die mit einem hakenförmig gebogenen Abschnitt (14; 24) des dem zweiten Schenkel der Halterung entsprechenden Endes zusammenwirken kann.

5. Befestigungseinrichtung nach Anspruch 4, dadurch gekennzeichnet, daß die Arretierungseinrichtungen eine Führungsrampe (15; 31) für das hakenförmige Ende des zweiten Schenkels der Halterung in einer Richtung zur Anschlagfläche hin umfassen.

6. Befestigungseinrichtung nach einem der vorhergehenden Ansprüche, dadurch gekennzeichnet, daß die Einrichtungen zur Befestigung des ersten Schenkels (4; 17) der Halterung am seitlichen Rand des Kühlers zwei Halteklauen (9a, 9b; 27, 28) für diesen Schenkel umfassen, die an dem dem Kühler entsprechenden seitlichen Rand vorgesehen sind.

7. Befestigungseinrichtung nach den Ansprüchen 2 und 6, dadurch gekennzeichnet, daß die Einrichtungen zur Befestigung mindestens eine Öffnung (10) umfassen, die sich in einer Ebene erstreckt, die nahezu senkrecht zur Ebene der Halteklauen (9a, 9b) verläuft, und in einem vorstehenden Teil (11) an der Fläche des Kühlers vorgesehen ist, wobei in diese Öffnung ein gebogener Abschnitt (12) des dem ersten Schenkel entsprechenden Endes eingreift.

8. Befestigungseinrichtung nach den Ansprüchen 3 und 6, dadurch gekennzeichnet, daß die Einrichtungen zur Befestigung mindestens eine Öffnung (29) umfassen, die sich in einer Ebene erstreckt, die nahezu senkrecht zur Ebene der Halteklauen (27, 28) verläuft, und in einem Zwischenteil (16) angeordnet ist, wobei ein gebogener Abschnitt (30) des dem ersten Schenkel entsprechenden Endes in die Öffnung eingreift.
